# EUROPÄISCHE PATENTSCHRIFT

(11) **EP 3 383 094 B1**
(45) Veröffentlichungstag und Bekanntmachung des Hinweises auf die Patenterteilung: **23.10.2019**
(21) Anmeldenummer: 17164170.7
(22) Anmeldetag: 31.03.2017
(51) Int. Cl.: H04W 36/02, H04W 84/00

(54) **SYSTEM UND VERFAHREN ZUR ÜBERTRAGUNG VON INHALTEN MIT GROSSEN DATENVOLUMEN IN KURZER ZEIT**
SYSTEM AND METHOD FOR TRANSMITTING CONTENT WITH LARGE DATA VOLUMES IN A SHORT AMOUNT OF TIME
SYSTÈME ET PROCÉDÉ DE TRANSFERT DE CONTENUS AYANT UN GRAND VOLUME DE DONNÉES DANS UN LAPS DE TEMPS COURT

(43) Veröffentlichungstag der Anmeldung: 03.10.2018
(73) Patentinhaber: Deutsche Telekom AG, 53113 Bonn (DE)
(72) Erfinder: LANGE, Christoph, 10318 Berlin (DE); KOSIANKOWSKI, Dirk, 15732 Eichwalde (DE)
(74) Vertreter: Vossius & Partner Patentanwälte Rechtsanwälte mbB

(56) Entgegenhaltungen:
- EP-A1- 3 062 556
- US-A1- 2010 057 563
- US-A1- 2014 254 543
- US-A1- 2015 131 519

## Beschreibung

Die vorliegende Erfindung bezieht sich allgemein auf das Gebiet der Datenübertragung in Telekommunikationsnetzen und insbesondere auf Anwendungen zur hochbitratigen Datenübertragung. Im Speziellen betrifft die Erfindung ein System und ein Verfahren zur Übertragung großer Datenvolumen in kurzer Zeit.

Eine permanente Anbindung von Endgeräten an Telekommunikationsnetze und damit an das Internet und internetbasierte Dienste beziehungsweise Inhalte wird in der heutigen Zeit von Nutzern überall und dauerhaft erwartet. Jedoch gibt es Situationen, in denen ein breitbandiger Netzzugang sehr aufwendig oder nicht realisierbar ist. Durch eine Bewegungsgeschwindigkeit eines Zielobjektes, wie eines Kraftfahrzeugs, eines Zuges (ICE) oder eines Flugzeugs, kann die erzielbare Datenrate einer Datenverbindung reduziert sein. Zielobjekte im Sinne der Erfindung sind vorzugsweise, aber auch Endgeräte selbst. Eine Anbindung kann abhängig von der örtlich verfügbaren Technik, insbesondere an den Mobilfunk nicht realisierbar sein. So kann zwar eine Konnektivität bestehen, aber deren Bitrate ist zur Nutzung der gewünschten Inhalte nicht ausreichend. Insbesondere dann nicht, wenn Filme oder andere Inhalte mit großem Datenvolumen konsumiert werden.

Heutige Techniken und Verfahren für einen mobilen Netzzugang beruhen typischerweise auf einer funkbasierten Anbindung von Endgeräten an mindestens einen Access-Point. Die Datenverbindungsinfrastruktur ist dabei entweder flächendeckend, wie beispielsweise bei einer Datenübertragung in Mobilfunknetzen. Alternativ ist die Datenverbindungsinfrastruktur räumlich begrenzt, wie beispielsweise bei WLAN-Netzwerken in Flughäfen, auf Bahnhöfen oder in Cafés. Dabei erfolgt üblicherweise die flächendeckende Datenversorgung in einem Mobilfunknetz mit geringerer Bitrate als die räumlich begrenzte Datenversorgung in WLAN oder WLAN-artigen Netzen.

In Verfahren und Systemen aus dem Stand der Technik wird, wenn die erwähnten mehr oder weniger breitbandigen Verbindungen bestehen, auf gewünschte Inhalte mit großem Datenvolumen zugegriffen. Bestehen diese Verbindungen nicht oder nicht mehr, ist der Zugriff auf die Inhalte nicht möglich. Ein Nutzer kann selbst Sorge tragen und Inhalte, die er beispielsweise während eines Fluges oder einer Zugfahrt ohne Internetanbindung nutzen möchte, im Vorfeld herunterladen. Ein solches Verfahren ist nicht nur umständlich, sondern wird auch den heutigen Nutzungsgewohnheiten vieler Nutzer nicht mehr gerecht.

In einigen Fällen ist ein solches Vorabladen technisch und rechtlich unter Umständen nicht möglich. Insbesondere bei DRM-geschützten Daten oder Streaming -Angeboten ist ein lokales Speichern für eine spätere Wiedergabe oft nicht vorgesehen.

Die Dokumente US 2010/0057563 A1, EP 3 062 556 A1 und US 2015/0131519 sind von Bedeutung, um den Kontext der Erfindung zu verstehen.

Der Erfindung liegt die Aufgabe zugrunde ein System, ein Verfahren, und Vorrichtungen zur Übertragung von Inhalten mit großen Datenvolumen in kurzer Zeit bereitzustellen.

Diese Aufgabe wird von dem Gegenstand der unabhängigen Patentansprüche gelöst. Die abhängigen Patentansprüche betreffen weitere Aspekte der Erfindung.

Die Grundidee der Erfindung besteht darin, dass zu Zeiten und an Orten, an denen eine hochbitratige Übertragungsverbindung mit dem gewünschten Endgerät und/oder dem Zielobjekt möglich ist, gewissermaßen zeitlich versetzt und unterbrochen ein Datenvorrat, bevorzugt auf einem dem Endgerät zugänglichen Speicher, angelegt wird. Die Daten und/oder Inhalte werden dabei zu einem sich bewegenden Zielobjekt übertragen, das nicht über eine permanente breitbandige Netzverbindung verfügt.

Es werden dabei die Inhalte vorgehalten, die voraussichtlich angefordert werden und/oder vorher angefordert wurden.

Im Kontext der vorliegenden Erfindung sind insbesondere folgende Anwendungsszenarien für eine mobile Datenübertragung und die korrespondierenden klassischen Konnektivitätsoptionen von Interesse:
i. Ein erstes Anwendungsszenario betrifft eine Datennutzung in einem Kraftfahrzeug und die Nutzung des herkömmlichen Mobilfunks. Dieses Szenario entspricht einem einzelnen Endgerät und/oder einer kleinen Zahl von Endgeräten, die sich mit mittlerer Geschwindigkeit in einem Gebiet mit guter Netzinfrastruktur auf einem vorgegebenen Netz frei bewegt.
ii. Ein zweites Anwendungsszenario betrifft eine Datennutzung durch einen Fußgänger bei Nutzung von konventionellem Mobilfunk mit den gängigen Standards 2G, 3G, 4G, zukünftig 5G, sowie WLAN. Das entspricht einem Szenario, eines einzelnen Endgeräts, das sich langsam in einem Gebiet mit guter Netzinfrastruktur völlig frei bewegt.
iii. Ein drittes Anwendungsszenario betrifft eine Datennutzung in einem Zug bei Nutzung einer direkten Netzverbindung eines Endgeräts mit herkömmlichem Mobilfunk oder WLAN im Zug und Außenverbindung mit Mobilfunk, siehe Literatur 1. Dieses Szenario entspricht einer großen Zahl von Endgeräten, die sich mit hoher Geschwindigkeit in einem Gebiet mit sehr begrenzter Netzinfrastruktur auf einer vorgegebenen Strecke bewegt.
iv. Ein viertes Anwendungsszenario betrifft eine Datennutzung in einem Flugzeug bei Nutzung einer direkten Netzverbindung eines Endgeräts mit herkömmlichem WLAN im Flugzeug und Außenverbindung mit Mobilfunk, vorzugsweise einer Direct-Air-to-Ground-Verbindung, siehe Literatur 2. Dieses Szenario entspricht einer großen Anzahl von Endgeräten, die sich mit sehr hoher Geschwindigkeit in einem Gebiet ohne oder mit sehr begrenzter Netzinfrastruktur auf einer vorgegebenen Strecke bewegt.

Dem Fachmann ist ersichtlich, dass weitere Nutzungsszenarien möglich sind, diese sich aber auch als Mischform auf die voranstehenden Typen abbilden lassen.

Je nach Anwendungsszenario wird der Vorrat entweder direkt im Endgerät beim Nutzer aufgebaut, oder aber im Zielobjekt, in dem sich der Nutzer mit seinem Endgerät befindet oder befinden wird. Der Speicher ist im zweiten Fall für den Nutzer in der Regel nicht direkt zugänglich und unterscheidet sich von einem lokalen Speicher im Endgerät. Der Speicher ist stattdessen vorzugsweise dem Netzwerk zugeordnet, woraus sich Vorteile bezüglich des digitalen Rechtemanagement bzw. engl. Digital Rights Management (DRM) ergeben können.

Das erfindungsgemäße System und Verfahren ermöglicht von Zeit zu Zeit bei geografisch oder durch die Infrastruktur als günstig gegebener Gelegenheit einen Vorrat an Inhalten mit hochbitratiger Technik in einen Speicher im Gerät und/oder in einen Zentralspeicher zu laden, aus dem die Inhalte dann in Zeiten, in welchen die Datenverbindung auf eine Grundkonnektivität reduziert oder vollständig unterbrochen ist, abgerufen werden können. Das zuletzt genannte Herunterladen aus dem Zentralspeicher kann dann in Zeiten niederbitratiger Grundkonnektivität bzw. totaler Unterbrechung trotzdem mit hoher Geschwindigkeit über eine kurzreichweitige vorzugsweise eine drahtlose Verbindung mit dem Endgerät erfolgen, oder erfolgt geräteintern über ein geeignetes Bussystem im Endgerät.

Im Folgenden wird ein System und ein Verfahren beschrieben, welches es gestattet, mit hochbitratiger drahtloser Übertragungstechnik das Herunterladen von Inhalten von einem im Internet weit entfernten Punkt/Server zu ermöglichen und eine entsprechende Steuerung auszuführen, die es gestattet, die gewünschten Inhalte vorzuhalten, damit sie dann dem Endgerät in geeigneter Weise und zu beliebigen Zeiten zur Verfügung stehen.

Ein Aspekt der Erfindung betrifft ein System zur Übertragung von Inhalten mit großem Datenvolumen mit mindestens einem ortsfesten Access Points, der jeweils mindestens eine Sendevorrichtung für große Übertragungsraten mit einer bestimmten Sendereichweite aufweist, und mindestens einer mobilen Einheit, die mindestens eine Empfangsvorrichtung für große Übertragungsraten aufweist und die sich in die Sendereichweite des Access Points bewegen kann.

Die Sendevorrichtung des Access Points und die Empfangsvorrichtung der mobilen Einheit sind konfiguriert, mindestens eine drahtlose hochbitratige erste Datenverbindung zum Austausch der Inhalte aufzubauen, wenn die mobile Einheit innerhalb der Sendereichweite der Sendevorrichtung des Access Point ist.

Die Sendevorrichtung weist einen Datenbereitstellungsspeicher auf und ist konfiguriert, aus einem Datennetzwerk Inhalte für eine Übertragung auf der hochbitratigen ersten Datenverbindung zu speichern.

Die Empfangsvorrichtung weist einen Datenvorhaltespeicher auf und ist konfiguriert, die aus der Übertragung auf der hochbitratigen ersten Datenverbindung empfangenen Inhalte zu speichern.

Die Sendevorrichtung des Access Points und die Empfangsvorrichtung der mobilen Einheit sind konfiguriert, über die hochbitratige erste Datenverbindung Daten aus dem Datenbereithaltungsspeicher in den Datenvorhaltespeicher zu übertragen, wenn die mobile Einheit innerhalb der Sendereichweite der Sendevorrichtung des Access Point ist.

In einer Ausführungsform der Erfindung weist ein System zur Übertragung von Inhalten mit großem Datenvolumen mindestens zwei ortsfeste Access-Points auf, die jeweils mindestens eine Sendevorrichtung für große Übertragungsraten mit einer bestimmten Sendereichweite aufweisen, und das System weist ferner mindestens eine mobile Einheit auf, die mindestens eine Empfangsvorrichtung für große Übertragungsraten aufweist und die sich von der Sendereichweite eines Access-Points in die Sendereichweite eines anderen Access-Points bewegen kann.

Die Sendevorrichtung eines jeden Access-Points und die Empfangsvorrichtung der mobilen Einheit sind konfiguriert, mindestens eine drahtlose hochbitratige erste Datenverbindung zum Austausch der Inhalte aufzubauen, wenn die mobile Einheit innerhalb der Sendereichweite der Sendevorrichtung des Access-Point ist.

Die Sendevorrichtung weist einen Datenbereitstellungsspeicher auf und ist konfiguriert, aus einem Datennetzwerk Inhalte für eine Übertragung auf der hochbitratigen ersten Datenverbindung zu speichern.

Die Empfangsvorrichtung weist einen Datenvorhaltespeicher auf und ist konfiguriert, die aus der Übertragung auf der hochbitratigen ersten Datenverbindung empfangenen Inhalte zu speichern. Die Sendevorrichtung eines jeden Access-Points und die Empfangsvorrichtung der mobilen Einheit sind konfiguriert, über die hochbitratige erste Datenverbindung Daten aus dem Datenbereithaltungsspeicher in den Datenvorhaltespeicher zu übertragen, wenn die mobile Einheit innerhalb der Sendereichweite der Sendevorrichtung des Access-Points ist.

Gemäß einem weiteren Aspekt der Erfindung weist das System eine zentrale Steuerungsvorrichtung auf, die konfiguriert ist, mit einer Sende-/Empfangsvorrichtung des jeweiligen Access-Points und einer Sende-/Empfangsvorrichtung mobilen Einheit Steuerungsinformationen auf mindestens einer zweiten Datenverbindung auszutauschen.

Die Steuerungsinformationen, die von der Sende-/Empfangsvorrichtung der mobilen Einheit an die zentrale Steuerungsvorrichtung gesendet werden und/oder die von der mobilen Einheit von der Steuerungsvorrichtung empfangen werden, weisen Steuerungsinformationen über bestimmte Inhalte, die übertragen werden sollen, und/oder Informationen über eine Bewegung der mobilen Einheit auf. Alternativ oder ergänzend ist die zentrale Steuerungsvorrichtung konfiguriert, basierend auf den Steuerungsinformationen, mindestens einen Access-Point zu bestimmen, in dessen Sendereichweite sich die mobile Einheit als nächstes befinden könnte und/oder den mindestens einen bestimmten Access-Point veranlasst, die Inhalte für eine Übertragung bereitzuhalten.

Gemäß einem weiteren Aspekt der Erfindung ist eine Sendereichweite der zweiten Datenverbindung größer als eine Sendereichweite der hochbitratigen ersten Datenverbindung, und/oder eine Übertragungsrate der zweiten Datenverbindung ist kleiner als eine Übertragungsrate der hochbitratigen ersten Datenverbindung.

Gemäß einem weiteren Aspekt der Erfindung ist die Steuerungsvorrichtung konfiguriert, mindestens einen weiteren Access-Point zu bestimmen, der eine Übertragung durchführen wird und an dem die bestimmten Inhalte im Datenbereitstellungsspeicher angesammelt und bereitgehalten werden, insbesondere, wenn innerhalb einer vorbestimmten Zeit eine Übertragung von Daten aus dem Datenbereithaltungsspeicher in den Datenvorhaltespeicher über die hochbitratige erste Datenverbindung nicht oder nur teilweise stattgefunden hat.

Gemäß einem weiteren Aspekt der Erfindung ist die mobile Einheit mit mindestens einem Zielgerät verbunden und ist konfiguriert, die Inhalte aus dem Datenvorhaltespeicher an das Zielgerät zu übermitteln.

Gemäß einem weiteren Aspekt der Erfindung ist mindestens ein Access-Point an einem der Schienenverkehrsinfrastrukturelemente aus der folgenden Liste bereitgestellt: einem Bahnhof, einem Tunnel, einem bestimmten Schienenabschnitt, einer Signaleinrichtung und einer Beleuchtungseinrichtung. Die mindestens eine mobile Einheit ist an einem Schienenfahrzeug ausgeführt, das konfiguriert ist, sich entlang der Schienenverkehrsinfrastrukturelemente zu bewegen.

Gemäß einem weiteren Aspekt der Erfindung ist mindestens ein Access-Point an einem der Infrastrukturelemente aus der folgenden Liste bereit gestellt: einer Stelle mit einem öffentlichen Telefon, einem Tunnel, einer Haltestelle, einem Sendemast, einer Signaleinrichtung, einer Beleuchtungseinrichtung, einem Multifunktionsgehäuse und einer Außenwerbeeinrichtung. Die mobile Einheit ist an mindestens einem der Folgenden bereit gestellt: einem Fahrzeug, einem Flugzeug, einem Schiff, einem Tablet, einem Notebook, einem eBookreader, einer Spielekonsole, einer VR-/AR-Brille und einem Smart Pen. Das Zielgerät ist mindestens eines der folgenden: ein mobiles Smart Device, ein Telefon, ein Tablet, ein Notebook, ein eBookreader, eine Spielekonsole, eine VR-/AR-Brille und ein Smart Pen.

Gemäß einem weiteren Aspekt der Erfindung nutzt die hochbitratige erste Datenverbindung insbesondere mindestens eine der folgenden Technologien: LTE, 5G, WLAN bei 2.4 und/oder 5 GHz, VLC, WiGig bei 60 GHz, Richtfunk, THz-Funk und Laser-Richtstrahl. Alternativ oder ergänzend nutzt die zweite Datenverbindung mindestens eine der folgenden Technologien: GSM (EDGE), UMTS (HSPA), LTE, 5G, WLAN bei 2.4 und/oder 5 GHz, WiGig bei 60 GHz, Bluetooth, ZigBee und Z-Wave.

Ein weiterer Aspekt der Erfindung betrifft ein Verfahren insbesondere unter Verwendung eines Systems nach einem oben beschriebenen Aspekte, wobei das Verfahren die folgenden Schritte aufweist:
a) Bereitstellen einer Sendevorrichtung an dem Access Points und Bereitstellen einer Empfangsvorrichtung an der mobilen Einheit die konfiguriert sind, mindestens eine drahtlose hochbitratige erste Datenverbindung zum Austausch der Inhalte aufzubauen, wenn die mobile Einheit innerhalb der Sendereichweite der Sendevorrichtung des Access Point ist,
b) Bereitstellen einer Sendevorrichtung mit einem Datenbereitstellungsspeicher, die konfiguriert ist, aus einem Datennetzwerk Inhalte für eine Übertragung auf der hochbitratigen ersten Datenverbindung zu speichern,
c) Bereitstellen einer Empfangsvorrichtung mit einem Datenvorhaltespeicher, die konfiguriert ist, die aus der Übertragung auf der hochbitratigen ersten Datenverbindung empfangenen Inhalte zu speichern und
d) Übertragen von Daten aus dem Datenbereithaltungsspeicher in den Datenvorhaltespeicher über die hochbitratige erste Datenverbindung, wenn die mobile Einheit innerhalb der Sendereichweite der Sendevorrichtung des Access Point ist.

Gemäß einem weiteren Aspekt der Erfindung weist das Verfahren weiter folgende Schritte auf:
e) Überprüfen ob alle Inhalte aus dem Datenbereitstellungsspeicher in den Datenvorhaltespeicher übertragen wurden,
el) wenn die Inhalte nicht vollständig übertragen wurden, das Ermitteln mindestens eines nächsten Access Points an dem die Übertragung mit den Schritten a) bis d) mit den verbleibenden Inhalten erneut durchgeführt werden kann, basierend auf Bewegungsinformationen die in den Steuerungsinformationen enthalten sind,
e2) Beenden der Übertragung, wenn die Inhalte vollständig übertragen wurden.

Gemäß einem weiteren Aspekt der Erfindung weist das Verfahren den folgenden Schritt auf:
f) Übertragen der Inhalte aus dem Datenvorhaltespeicher an mindestens ein Zielgerät, wobei die Übertragung mit einer Drahtlostechnik, vorzugsweise WLAN oder VLC, erfolgt oder mit geeigneter Bus-Technik erfolgt.

Ein weiterer Aspekt der Erfindung betrifft eine mobile Einheit insbesondere zur Verwendung in einem System nach einem der voranstehenden Aspekte und/oder zur Verwendung in einem Verfahren nach einem der voranstehenden Aspekte.

Ein weiterer Aspekt der Erfindung betrifft einen Access Point insbesondere zur Verwendung in einem System nach einem der voranstehenden Aspekte und/oder zur Verwendung in einem Verfahren nach einem der voranstehenden Aspekte.

Die Erfindung hat den Vorteil, dass für konnektivitätslose oder -schwache Zeiten automatisiert Vorsorge getroffen wird, so dass gewünschte Inhalte zu den geeigneten Zeiten vorliegen und dem Nutzer ohne Unterbrechung zugänglich sind.

Es ist ein weiterer Vorteil der Erfindung, die Konnektivität insbesondere zur Nutzung großvolumiger Dateninhalte in der Art zu verbessern, so dass dem Nutzer ein stark verbessertes Nutzungserlebnis ermöglicht wird.

Es ist noch in weiterer Vorteil der Erfindung, auch in sich bewegenden Zielobjekten die Nutzung von Inhalten zu ermöglichen, die eine hohe Bitrate benötigen.

### Kurze Beschreibung der Figuren

In den Abbildungen zeigt:
Figur 1 ein Blockdiagramm einer Ausfuhrungsform eines erfindungsgemäßen Systems mit einer erfindungsgemäßen Sendevorrichtung und einer erfindungsgemäßen Empfangsvorrichtung,
Figur 2 eine schematische Darstellung einer Ausführungsform des erfindungsgemäßen Systems,
Figur 3 ein Ablaufdiagram in einer Ausführungsform des erfindungsgemäßen Verfahrens,
Figur 4 eine Ausführungsform der Erfindung in einem ersten Anwendungsszenario,
Figur 5 eine Ausführungsform der Erfindung in einem zweiten Anwendungsszenario,
Figur 6 eine Ausführungsform der Erfindung in einem dritten Anwendungsszenario,
Figur 7 eine detaillierte Darstellung einer Datenübertragung gemäß dem Stand der Technik für das dritte Anwendungsszenario, und
Figur 8 eine detaillierte Darstellung einer Datenübertragung in einer Ausführungsform der Erfindung für das dritte Anwendungsszenario.

### Detaillierte Beschreibung der Erfindung

Die Erfindung gestattet es, wenn keine permanente hochbitratige Verbindung besteht, von Zeit zu Zeit Inhalte mit sehr hoher Bitrate herunterzuladen und Dateien mit großem Volumen, beispielsweise Filme, Bücher, Zeitschriften, oder Audiodateien, in einem geeigneten Speicher zwischen zu speichern und bei Bedarf zum Abruf und zur Nutzung verfügbar zu halten, insbesondere für Zeiten zur Verfügung zu halten, in denen keine hochbitratige Konnektivität mehr besteht. Dabei werden folgende Anwendungsszenarien unterschieden:
I. Langsame Bewegung (quasi-stationär). Dieses Szenario entspricht dem oben genannten Anwendungsszenario ii). Erfindungsgemäß erfolgt das Herunterladen der Inhalte an Informationspunkten, insbesondere beim Laufen in einem Flughafenterminal, beim Zugang zu einem Flugzeug, auf einem Bahnhof oder an beliebten Plätzen in der Öffentlichkeit. Die Übertragung findet direkt auf das Endgerät statt, insbesondere auf ein Smartphone und/oder Tablet.
II. Schnelle Bewegung (nicht-stationär). Dieses Szenario entspricht den oben genannten Anwendungsszenarien i), iii) und iv), d.h. der Datenübertragung an ein Kraftfahrzeug, einen Zug oder ein Flugzeug. Die erfindungsgemäße Übertragung der Inhalte in den Zentralspeicher der mobilen Einheit am jeweiligen Zielobjekt findet an geeigneten Infrastrukturelementen statt, vorzugsweise beim Durchfahren von Brücken, Maut-Brücken, Tunneln, oder in Bahnhöfen. Die Infrastrukturelemente sind mit entsprechenden Access Points mit Vorhaltespeichern und hochbitratigen drahtlosen Sendern ausgestattet. Ebenso können Flugzeuge auf Flughäfen mit Inhalten "betankt" werden, die dann während des Fluges, während keine oder sehr eingeschränkte Netzkonnektivität besteht, aufgerufen werden können. Technisch sind die genannten Ausführungsformen darin ähnlich, dass mehrere Zielgeräte in einem Zielobjekt bedient werden. Die Übertragung zum jeweiligen Zielgerät erfolgt über geeignete Drahtlostechniken im Zielobjekt, insbesondere WLAN oder VLC. Unterschiede bestehen in der Bewegungsfreiheit des Zielobjekts und damit in dem Aufwand, der für die Ermittlung eines nächsten Access Points nötig ist.

In einer Ausführungsform können die gewünschten Inhalte entweder durch den Nutzer und/oder eine Softwareapplikation auf dem Endgerät vorgebucht oder vorgemerkt werden. Insbesondere ist eine Vorbuchung/Vormerkung über ein Web-Portal, das vor Reiseantritt bei Flug- oder Zugreisen besucht wird oder eine Smartphone-App, die auch als Reiseportal dienen kann, vorteilhaft. Alternativ oder ergänzend ist eine Steuerungsvorrichtung im System vorgesehen, die basierend auf einer Datenauswertung, insbesondere basierend auf Big-Data Algorithmen, beliebte Inhalte identifiziert und das System mit Informationen zur Steuerung so versorgt, dass die passenden Inhalte vorgehalten werden können. So können vorzugsweise Inhalte mit Bezug zu Orten und/oder Sehenswürdigkeiten am Reiseziel vorgehalten werden.

Die Sendeseite des Systems, die an geeigneten Infrastrukturelementen, vorzugsweise an Bahnhöfen, Tunneln, Brücken, oder Flughäfen, ausgeführt ist, verfügt über geeignete Sendetechnik, die Inhalte hochbitratig übertragen kann.

Die Empfangsseite kann die Daten, bei der nächsten Durchfahrt der mobilen Einheit, die am Zielobjekt ausgeführt ist, an einer geeigneten Sendestation/Access-Point anfordern und oder empfangen. Die Daten werden vorzugsweise vorab zu den jeweiligen Sendestationen geschickt und dort in einem lokalen Speicher des Access-Points bis zur Übergabe an den Empfänger abgelegt.

Um die benötigten Inhalte zeitlich und örtlich passend auf den Vorratsspeichern zu platzieren und vorhalten zu können, wird vorzugsweise eine Signalisierung/Steuerung bereitgestellt, die vorzugsweise basierend auf einer Vernetzung der Access-Points über bestehende Netzinfrastrukturen abgewickelt wird. Hier ist keine sehr breitbandige Anbindung notwendig, so dass herkömmliche, vorzugsweise leitungsgebundene Verfahren, aber auch Verfahren des Mobilfunks genutzt werden können. Eine Steuereinheit, die vorzugsweise in einem Rechenzentrum residiert, koordiniert die Verteilung der Inhalte.

Im Folgenden werden Ausführungsformen für die oben genannten Anwendungsszenarien anhand der Figuren detailliert beschrieben. Gleiche Bezugszeichen beziehen sich auf gleiche oder ähnliche Elemente. Auf eine Wiederholung von Details bestimmter Elemente, insbesondere von solchen mit gleichen Bezugszeichen, wird verzichtet. Auch wird nur die Übertragung in den Ausführungsformen primär anhand der Nutzung von Visible Light Communication (VLC) beschrieben. Für den Fachmann ist jedoch ersichtlich, dass auch jede andere hochbitratige Übertragungstechnik verwendet werden kann. Im Folgenden werden die Begriffe Sendestation und Access-Point einerseits sowie Endgerät und Zielgerät anderseits synonym verwendet.

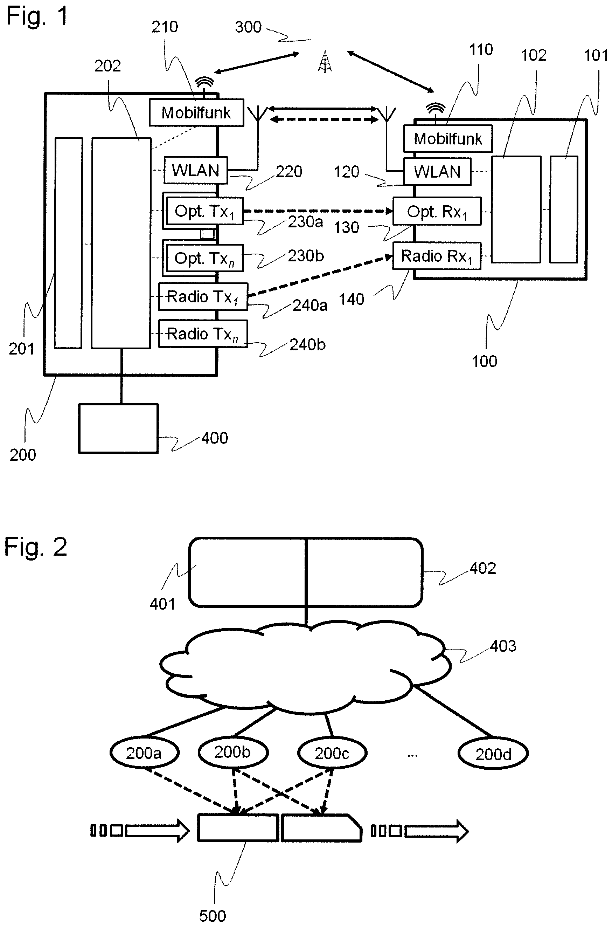

Figur 1 zeigt ein Blockdiagramm einer Ausführungsform des erfindungsgemäßen Systems. Es besteht aus einer mobilen Einheit 100, einem Access-Point 200 mit mehreren Sendevorrichtungen 220, 230a, 230b, 240a, 240b vorzugsweise für unterschiedliche Übertragungsverfahren, sowie einer geeigneten Steuerungsvorrichtung 202 und mindestens einem angeschlossenen Speicher 201.

Der Access-Point 200 ist so konfiguriert, dass die Sendevorrichtungen auf mindestens einem Kanal 230, 240 drahtlose Signale mit sehr hoher Übertragungsrate senden kann. Eine bevorzugte Technik ist die VLC 230, die drahtlos im optischen Spektrum arbeitet. Weiter bevorzugt ist ein Kanal mit WiGig 240, ein funkbasiertes Verfahren, das mit ähnlich hohen Datenraten arbeitet, vgl. Literatur 3. Im Accesspoint 200 ist eine Steuerungsvorrichtung 202 und ein Datenbereitstellungsspeicher 201 angeordnet. Der Datenbereitstellungsspeicher kann Inhalte verschiedener Art, vorzugsweise Audiodateien, Videodateien, Webseiten, Bücher- und/oder andere Mediendateien, ansammeln, die bei Anforderung durch die mobile Einheit 100 abgerufen werden können.

Die Auswahl der Inhalte, die in dem Speicher 201 vorgehalten werden, erfolgt vorzugsweise basierend auf deren Popularität, vorzugsweise unter Einbeziehung von Kontextinformationen, wie der aktuellen politischen Situation und/oder aktuellen Sportereignissen. Alternativ oder ergänzend kann über ein Web-Portal oder eine App eine Anzahl von vorgebuchten Inhalten zusammengestellt werden.

Weiter können Prinzipien der Datenverarbeitung großer Datenmengen angewendet werden, d.h. Big Data, um die am wahrscheinlichsten benötigten Inhalte zu bestimmen.

Die mobile Einheit 100 ist so konfiguriert, dass drahtlose Signale auf mindestens einem Kanal 130, 140 mit einer sehr hohen Übertragungsrate empfangen werden können. Bevorzugt ist VLC 130, d.h. ein Lichtstrahl wird von fotodetektierenden Elementen empfangen. In einigen Ausführungsformen ist die mobile Einheit 100 an einem beweglichen Zielobjekt angeordnet. Alternativ oder ergänzend kann die mobile Einheit 100 direkt am Endgerät ausgebildet sein und/oder in die Hard- bzw. Software des Endgeräts integriert sein.

Die empfangenen Inhalte werden in der mobilen Einheit 100 in einen Zentralspeicher 101 abgelegt. In einigen Ausführungsformen können die Daten innerhalb des sich bewegenden Zielobjekts mit einer geeigneten Drahtlostechnik mit kurzer Reichweite und hoher Bitrate von der mobilen Einheit abgerufen werden, vorzugsweise WLAN oder verwandte Techniken. Entsprechende Sendeeinrichtungen für die Datenweitergabe sind nicht dargestellt.

Alternativ können die Inhalte innerhalb des Endgeräts über geeignete Bussysteme weitergegeben werden. In jedem Fall ist die Nutzung der Inhalte erfindungsgemäß unabhängig von einer hochbitratigen Außenanbindung, eine Grundkonnektivität ist für eventuelle Steuerungsaufgaben ausreichend. Diese Grundkonnektivität 300 ist vorzugsweise über WLAN 120, 220 oder eine Mobilfunkanbindung 300 auf der Sender- und Empfängerseite realisiert. Dadurch können bidirektionale Steuerungsdaten ausgetauscht werden, die nicht zwingend eine hochbitratige Übertragung erfordern. Über diesen Kanal können dann auch Informationen zu einem zentralen Rechner und/oder Rechenzentrum zur Steuerung des Systems gesendet werden.

Figur 2 zeigt eine schematische Darstellung einer Ausführungsform des erfindungsgemäßen Systems mit der Einbettung in eine schematische Netzstruktur. Ein zentraler Rechner 401, der z. B. in einem Rechenzentrum residiert, verfügt über eine Steuerinstanz und die Inhalte 402; diese können ebenso in einer Cloud mit verteilten Servern liegen. Die Steuerinstanz 401, die vorzugsweise die Inhalteverteilung steuert, kann alternativ in einer Cloud ausgelagert sein. Über ein Kommunikationsnetz 403, vorzugsweise das Internet, werden die einzelnen Access-Points 200a bis 200d angesprochen und mit Inhalten versorgt, die entlang einer erwarteten und/oder festgelegten Strecke des beweglichen Zielobjekts 500 liegen. Es wird dann über die Steuerung 401 dem jeweiligen Access-Point 200a bis 200d jeweils ein Teil des Inhaltes zugeteilt, der dort wahrscheinlich heruntergeladen werden soll. Beispielsweise können am Access Point 200a eines oder mehrere Kapitel eines Film, einer Musik oder eines Buches vom Access-Point 200a zum bewegten Zielobjekt 500 übertragen werden. Dann wird über die Steuerung 401 an Access-Point 200b an der vorhergesagten Strecke gemeldet, dass weitere Kapitel dort heruntergeladen und bereitgehalten werden können, sollte das bewegte Zielobjekt 500 dort in einer vorgegebenen Zeitspanne sich vorbeibewegen.

Dieser Ablauf ist universell in den verschiedenen Anwendungsszenarien, wobei die wahrscheinlich angeforderten Inhalte und der vorhergesehene Bewegungsweg je nach Zielobjekttyp unterschiedlich vorhergesagt werden kann. So gibt bei Zügen die Trassenführung/Zugplanung den Weg des Zielobjekts recht genau vor. Bei Kraftfahrzeugen gilt dies abgeschwächt, da diese sich mit einer kalkulierbaren Geschwindigkeit auf einem definierten Straßennetz bewegen. Bei Fußgängern hingegen ist eine Vorbestimmung einer Route vom Verhalten der Fußgänger abhängig, jedoch auch die Bewegungsgeschwindigkeit sehr viel geringer.

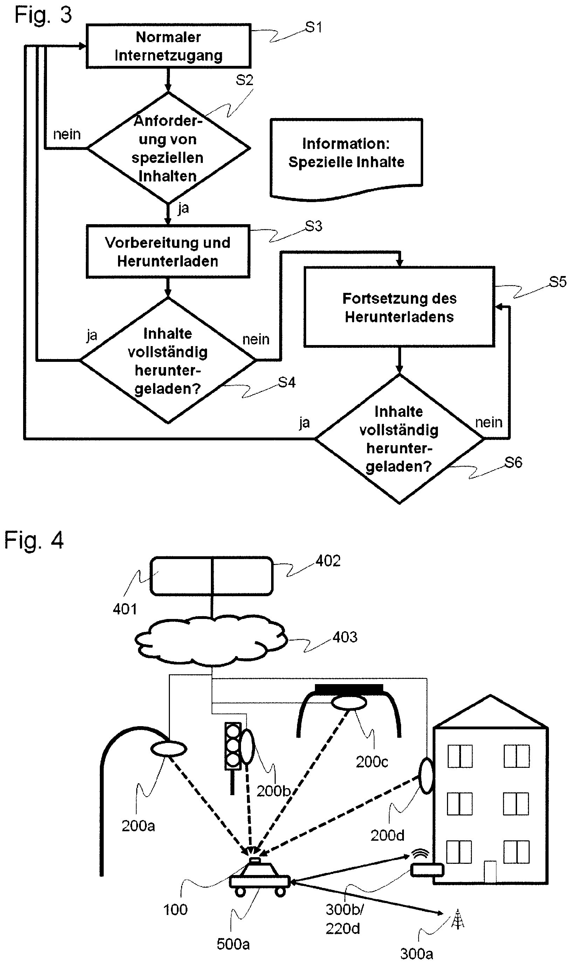

Figur 3 zeigt ein Ablaufdiagram einer Ausführungsform des erfindungsgemäßen Verfahrens. Ausgehend von einem herkömmlichen Internetzugang S1, wird vorzugsweise über Mobilfunk und/oder WLAN, geprüft oder abgefragt S2, ob sogenannte spezielle Inhalte, d.h. solche Inhalte mit hohen Anforderungen an Übertragungsrate und Speicherplatz, benötigt werden. Ist dies nicht der Fall, bleibt es beim herkömmlichen Internetzugang S1. In einer Ausführungsform werden Informationen, die spezielle Inhalte betreffen übertragen.

Werden hingegen spezielle Inhalte angefordert, wird eine erfindungsgemäße Übertragung vorbereitet und durchgeführt S3. Die anschließende Überprüfung S4 ermittelt, ob der Inhalt vollständig auf das Zielobjekt 500 heruntergeladen werden konnte, d.h. ob beispielsweise alle Kapitel eines bestimmten eBooks oder alle Folgen einer Serie übertragen wurden. Ist dies der Fall, wird auf den normalen Internetzugang S1 zurückgeschaltet. Werden demgegenüber weitere Teile des Inhaltes erwartet, so ist verfahrensgemäß der nächste mögliche Access Point 200 für das Herunterladen zu ermitteln S5. Dort ist der entsprechende ergänzende Inhalt vorzuhalten und auf das Zielobjekt 500 zu übertragen. Dieser Ablauf S4, S5, S6 wird so lange wiederholt, bis der gesamte angeforderte Inhalt sein Zielobjekt 500 erreicht hat.

Figur 4 zeigt eine Ausführungsform der Erfindung in einem ersten Anwendungsszenario, d.h. für ein Kraftfahrzeug 500a im Straßenverkehr. Die Access-Points 200a, 200b, 200c, 200d sind bevorzugt an Infrastrukturelementen wie Brücken, Maut-Brücken 200c, Verkehrslenkungseinrichtungen 200b und/oder Straßenlaternen 200a ausgebildet. Untereinander sind die Access-Points 200a bis 200d vernetzt, um sie mit Inhalten ausstatten zu können und entsprechende Signalisierungen abwickeln und Steuerinformationen austauschen zu können. Es ist vorteilhaft, wenn dabei auch Nutzerpräferenzen ausgetauscht werden, die vorzugsweise über ein Web-Interface, eine App oder Big-Data-Analysen gewonnen werden.

In einer Ausfiihrungsform sind die Access-Points 200a bis 200d mit der Steuervorrichtung 401 und einer Quelle 402 für die speziellen Inhalte verbunden, vgl. Figur 2.

Die Sender in den Access-Points 200a bis 200d sind vorzugsweise mit VLC-Sendeeinheiten zum Aufbau einer hochbitratigen ersten Datenverbindung ausgerüstet, die bevorzugt auf Dächer der unter Brücken hindurchfahrenden Fahrzeuge 500a ausgerichtet sind. Wird die Ankunft eines Fahrzeugs signalisiert, werden die entsprechenden speziellen Inhalte zum Versenden vorbereitet.

Zur Erkennung, ob sich ein Fahrzeug nähert, bieten sich mehrere Methoden an. Bevorzugt ist der Zugriff auf Positionierungssysteme im Fahrzeug und Schmalbandsignalisierung, etwa über Mobilfunk 300a/300b. Weiter bevorzugt ist eine Detektion vorbeifahrender Fahrzeuge 500a in öffentlichen WLAN-Netzen 220d, eine Positionierung basierend auf WLAN-Netzen. Eine Sonderform stellt der Zugriff auf Informationen aus einem Navigationssystem des Fahrzeugs 500a dar.

Befindet sich das Fahrzeug 500a im Sendebereich des Access-Points 200a bis 200d, erfolgt die Übertragung. Vorzugsweise auf dem Dach des Fahrzeugs befindet sich eine mobile Einheit 100. Insbesondere bei Ausführungsformen mit VLC ist es vorteilhaft, dass sich ein entsprechender fotoelektrischer Empfänger über die gesamte Länge des Fahrzeugdaches erstrecken kann. Es ist möglich, dass die Empfangsvorrichtung 100 ab Werk in das Fahrzeug 500a integriert ist oder zu einem späteren Zeitpunkt nachgerüstet wird.

Die empfangenen Inhalte werden dann auf einem Fahrzeug-Zentralspeicher abgelegt. Es wird geprüft, ob alle angeforderten Inhalte übertragen werden konnten. Sollte noch Inhalte fehlen wird dies über einen Schmalbandsignalisierungskanal 300a, 300b an eine zentrale Steuereinheit 401, oder ein Cloud-Backend 401, gemeldet. Es wird dann über die Nutzung von Fahrzeugdaten wie Ort, Geschwindigkeit, Straßenkarten, und/oder Informationen aus einem Fahrzeugnavigationssystem des Fahrzeugs 500a geschätzt, wann das Fahrzeug an welchem nächsten Access-Point erwartet werden kann. Dann werden die noch zu übertragenden Inhalte dorthin übertragen und/oder dort erneut aus der Quelle 402 geladen dort wird der verbleibende Anteil der zu übertragenden Inhalte oder mindestens ein Teil davon zum zentralen Fahrzeugserver per VLC zu übertragen.

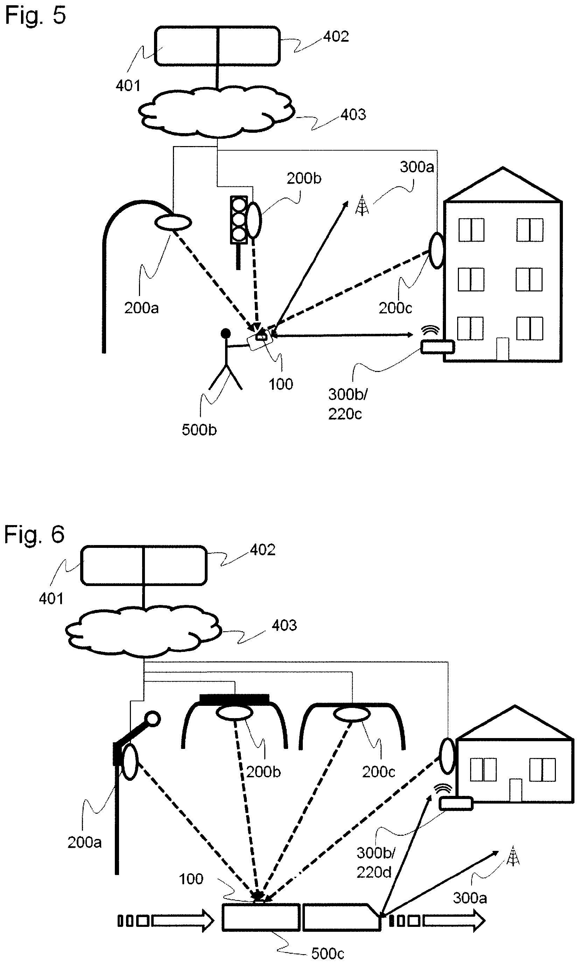

Figur 5 zeigt eine Ausführungsform der Erfindung in einem zweiten Anwendungsszenario, d.h. einem Fußgänger mit einem Endgerät, an dem eine mobile Einheit 100 ausgeführt ist. Das System in Ausführungsformen die Fußgänger betreffen ist in wesentlichen Elementen aufgebaut wie das System in den Anwendungsszenarien, die ein Kraftfahrzeug betreffen. Unterschiede ergeben sich aus der geringeren Bewegungsgeschwindigkeit bei einem Fußgänger. Die Access-Points 200a bis 200c sind bevorzugt an Infrastrukturelementen wie Straßenlaternen 200a, Straßenverkehrszeichen 200b, Häusern 200c, Außenwerbungselementen, Haltestellen und anderen Elementen, die sich als Straßen- oder Stadteinrichtungen bezeichnen lassen, ausgeführt. Mit anderen Worten, die Access-Points 200a bis 200c sind in der unmittelbaren Umgebung des Fußgängers ausgebildet. Außerdem befindet sich in dieser Ausführungsform die mobile Einheit 100 und das Endgerät in einer Baueinheit, vorzugsweise einem Smart Device wie einem Smartphone oder einem Tablet. Im Gegensatz dazu sind in Zielobjekten wie Kraftfahrzeug oder Zug die mobilen Einheiten 100 und die Endgeräte in der Regel baulich voneinander getrennt.

Figur 6 zeigt eine Ausführungsform der Erfindung in einem zweiten Anwendungsszenario, d.h. für einen Zug im Eisenbahnverkehr. Access-Points 200a bis 200d sind hier vorteilhaft an Bahnhöfen, an Brücken oder in Tunneln ausgebildet. Weiter ist eine Ausbildung an für den Eisenbahnbetrieb typischen Infrastrukturelementen wie Signaleinrichtungen und/oder Weichen möglich. Erreicht ein Zug einen der Access-Points 200a bis 200d, werden die Inhalte nach dem beschriebenen Prinzip übertragen.

Eine oder mehrere mobile Einheiten, bevorzugt für die VLC-Technik, befinden sich auf dem Zugdach und können so eine beträchtliche Länge aufweisen, was für die Länge der Übertragungsdauer und damit die Datenmenge vorteilhaft ist. Im Zug 500c werden die Inhalte dann auf einem Zentralspeicher gespeichert und von dort mittels Drahtlostechnik, bevorzugt WLAN oder VLC, an die Endgeräte ausgegeben.

Über die Signalisierung 300a, 300b und Steuerung 401 kann an weitere Access-Points 200a bis 200d entlang der Strecke weitergegeben werden, welche Inhalte noch nicht vollständig übertragen werden konnten; diese werden dann dort ausgesendet oder werden erneut ausgesendet, wenn sie nicht vollständig empfangen werden konnten. Der Fachmann erkennt, dass Eisenbahnnetze in Verbindung mit Zugnummern determinierter sind als Straßennetze, so dass der Vohersageaufwand in dieser Ausführungsform geringer ausfällt. Insbesondere kann ein Backend 401, basierend auf einem Abgleich mit einem Zuginformationssystemen, exakt bestimmen, wann der Zug 500c welchen Access Point 200a bis 200d passiert.

Weitere Vorteile ergeben sich aus der Länge von Zügen. So können mehrere mobile Einheiten 100 ausgebildet werden und/oder mehrere Empfangsvorrichtungen an einer mobilen Einheit 100 ausgeführt werden. Es ist bevorzugt, dass mehrere Access-Points und/oder mehrere Sendevorrichtungen an einem Access-Point mit den Empfangsvorrichtungen zusammenwirken. So kann trotz der hohen Geschwindigkeit des Zuges eine lange Verbindungszeit erreicht werden. Insbesondere bei Tunneldurchfahrten oder Bahnhofsdurchfahrten kann so eine lange Übertragungszeit für die hochbitratige erste Datenverbindung erreicht werden. In einer weiteren Ausführungsform sind spezielle Übertragungselemente mit einem oder mehreren Access Points entlang einer Bahnstrecke vorgesehen.

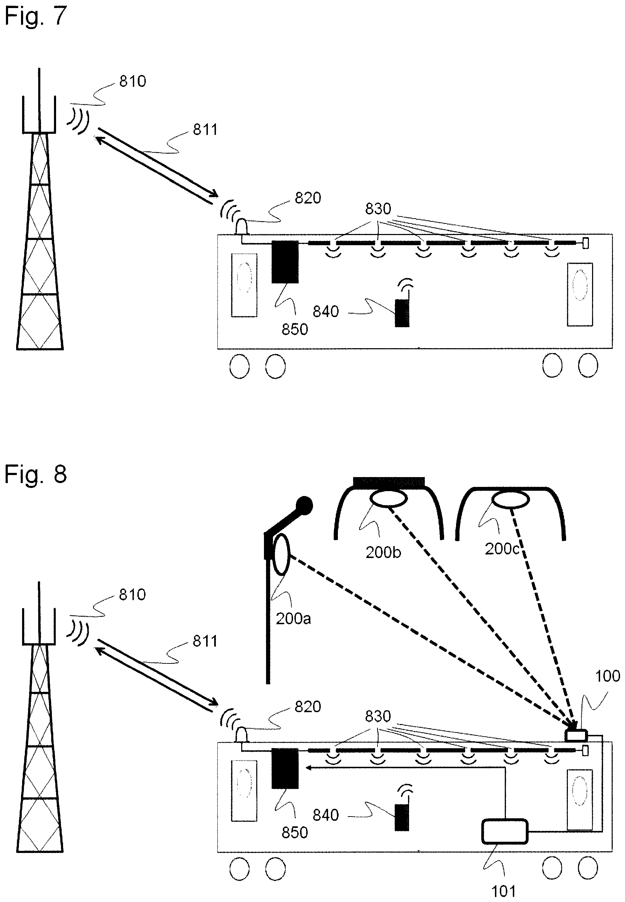

Abbildung 7 zeigt für das Anwendungsbeispiel des Zuges die herkömmliche Internetanbindung entsprechend des Standes der Technik mit Details zur Verteilung im Zug 800. Daten werden über eine Mobilfunkverbindung 811 von einem Mobilfunknetz 810 an einen Sender/Empfänger 820 der am Zug 800 ausgebildet ist, übertragen. Im Zug wird eine Datenverbindung für die Endgeräte 840 über Mobilfunk- oder WLAN-Repeater aufgebaut. Ein Steuergerät 850 übernimmt dabei die Aufteilung der Bandbreite der Mobilfunkverbindung 811 auf die einzelnen Endgeräte 840.

Abbildung 8 zeigt die Zug-Lösung mit der erfindungsgemäßen ergänzenden Technik in einer Ausführungsform der Erfindung. Hier wird die Mobilfunkverbindung vorzugsweise zur Übertragung von Steuerungsinformationen an das System oder für Telefonanrufe der Endgeräte genutzt, während große Daten von den Access-Points 200a bis 200c an die mobile Einheit 100 übertragen werden. In dieser Ausführungsform ist es vorteilhaft, wenn der Speicher 101 der mobilen Einheit mit der Steuerungsvorrichtung 850 verbunden ist. So kann das Repeaternetz 830 vorteilhaft genutzt werden, um den Endgeräten 840 den Zugriff auf die Daten im Datenvorhaltespeicher zu ermöglichen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

**Literatur:**

| | |
|---|---|
| Literatur 1 | Intertrain-Repeater: https://de.wikipedia.org/wiki/Intrain-Repeater Stand: 27.03.2017 |
| Literatur 2 | Die Deutsche Telekom, Alcatel-Lucent und Airbus testen erfolgreich schnelle Breitbanddienste für Passagierflugzeuge über ein "Direct-Air-to-Ground"-Kommunikationssystem auf Basis der LTE- Mobilfunktechnologie; https://www.telekom.com/medien/konzern/107624 |
| | Stand: 27.03.2017 |
| Literatur 3 | Wireless Gigabit Alliance (WiGig); IEEE 802.11 ad; https://en.wikipedia.org/wiki/Wireless_Gigabit_Alliance |
| | Stand: 27.03.2017 |

## Patentansprüche

1. System zur Übertragung von Inhalten mit großem Datenvolumen mit
mindestens einem ortsfesten Access Point, der jeweils mindestens eine Sendevorrichtung für große Übertragungsraten mit einer bestimmten Sendereichweite aufweist,
mindestens einer mobilen Einheit, die mindestens eine Empfangsvorrichtung für große Übertragungsraten aufweist und die sich in die Sendereichweite des Access Points bewegen kann, und
einer zentralen Steuerungsvorrichtung, die konfiguriert ist, mit dem Access Point und der mobilen Einheit Steuerungsinformationen auf mindestens einer zweiten Datenverbindung auszutauschen,
wobei eine Sendereichweite der zweiten Datenverbindung größer ist als eine Sendereichweite der hochbitratigen ersten Datenverbindung,
wobei eine Übertragungsrate der zweiten Datenverbindung kleiner ist als eine Übertragungsrate der hochbitratigen ersten Datenverbindung,
wobei die Sendevorrichtung des Access Points und die Empfangsvorrichtung der mobilen Einheit konfiguriert sind, mindestens eine drahtlose hochbitratige erste Datenverbindung zum Austausch der Inhalte aufzubauen, wenn die mobile Einheit innerhalb der Sendereichweite der Sendevorrichtung des Access Points ist,
wobei die Sendevorrichtung einen Datenbereitstellungsspeicher aufweist und konfiguriert ist, aus einem Datennetzwerk Inhalte für eine Übertragung auf der hochbitratigen ersten Datenverbindung zu speichern,
wobei die Empfangsvorrichtung einen Datenvorhaltespeicher aufweist und konfiguriert ist, die aus der Übertragung auf der hochbitratigen ersten Datenverbindung empfangenen Inhalte zu speichern und
wobei die Sendevorrichtung des Access Points und die Empfangsvorrichtung der mobilen Einheit konfiguriert sind, über die hochbitratige erste Datenverbindung Daten aus dem Datenbereithaltungsspeicher in den Datenvorhaltespeicher zu übertragen, wenn die mobile Einheit innerhalb der Sendereichweite der Sendevorrichtung des Access Points ist,
wobei die mobile Einheit mit mindestens einem Zielgerät verbunden ist und konfiguriert ist, die Inhalte aus dem Datenvorhaltespeicher an das Zielgerät zu übermitteln,
wobei die Steuerungsinformationen, die von der mobilen Einheit an die zentrale Steuerungsvorrichtung gesendet werden und/oder die von der mobilen Einheit von der Steuerungsvorrichtung empfangen werden, Steuerungsinformationen über bestimmte Inhalte, die übertragen werden sollen, und/oder Informationen über eine Bewegung der mobilen Einheit aufweisen,
wobei die zentrale Steuerungsvorrichtung konfiguriert ist, basierend auf den Steuerungsinformationen mindestens einen Access-Point zu bestimmen, in dessen Sendereichweite sich die mobile Einheit als nächstes befinden könnte und/oder den mindestens einen bestimmten Access Point veranlasst, die Inhalte für eine Übertragung bereitzuhalten.

2. System nach Anspruch 1,
wobei die Steuerungsvorrichtung konfiguriert ist, mindestens einen weiteren Access-Point zu bestimmen, der eine Übertragung durchführen wird und an dem die bestimmten Inhalte im Datenbereitstellungsspeicher angesammelt und bereitgehalten werden, wenn innerhalb einer vorbestimmten Zeit eine Übertragung von Daten aus dem Datenbereithaltungsspeicher in den Datenvorhaltespeicher über die hochbitratige erste Datenverbindung nicht oder nur teilweise stattgefunden hat.

3. System nach einem der Ansprüche 1 oder 2,
wobei mindestens ein Access Point an einem der Schienenverkehrsinfrastrukturelemente aus der folgenden Liste bereitgestellt ist: einem Bahnhof, einem Tunnel, einem bestimmten Schienenabschnitt, einer Signaleinrichtung und einer Beleuchtungseinrichtung,
wobei die mindestens eine mobile Einheit an einem Schienenfahrzeug ausgeführt ist, das konfiguriert ist, sich entlang der Schienenverkehrsinfrastrukturelemente zu bewegen.

4. System nach einem der Ansprüche 1 bis 3,
wobei mindestens ein Access Point an einem der Infrastrukturelemente aus der folgenden Liste bereitgestellt ist: einer Stelle mit einem öffentlichen Telefon, einem Tunnel, einer Haltestelle, einem Sendemast, einer Signaleinrichtung, einer Beleuchtungseinrichtung, und einer Außenwerbeeinrichtung;
wobei die mobile Einheit an mindestens einem der Folgenden bereitgestellt wird: einem Fahrzeug, einem Flugzeug, einem Schiff, einem Tablet, einem Notebook, einem eBookreader, einer Spielekonsole, einer VR-/AR-Brille, und einem Smart Pen; und/oder
wobei das Zielgerät mindestens eines der folgenden ist: ein mobiles Smart Device, ein Telefon, ein Tablet, ein Notebook, ein eBookreader, eine Spielekonsole, eine VR-/AR-Brille, und ein Smart Pen.

5. System nach einem der Ansprüche 1 bis 4,
wobei die hochbitratige erste Datenverbindung mindestens eine der folgenden Technologien nutzt: LTE, 5G, WLAN bei 2,4 und/oder 5 GHz, VLC, WiGig bei 60 GHz, Richtfunk, THz-Funk, und Laser-Richtstrahl; und/oder
wobei die zweite Datenverbindung mindestens eine der folgenden Technologien nutzt:
GSM (EDGE), UMTS (HSPA), LTE, 5G, WLAN bei 2,4 und/oder 5 GHz, WiGig bei 60 GHz, Bluetooth, ZigBee und Z-Wave.

6. Ein Verfahren unter Verwendung eines Systems nach einem der Ansprüche 1 bis 5, wobei das Verfahren die folgenden Schritte aufweist:
a) Bereitstellen einer Sendevorrichtung an dem Access Point und Bereitstellen einer Empfangsvorrichtung an der mobilen Einheit, die konfiguriert sind, mindestens eine drahtlose hochbitratige erste Datenverbindung zum Austausch der Inhalte aufzubauen, wenn die mobile Einheit innerhalb der Sendereichweite der Sendevorrichtung des Access Points ist,
b) Bereitstellen einer Sendevorrichtung mit einem Datenbereitstellungsspeicher, die konfiguriert ist, aus einem Datennetzwerk Inhalte für eine Übertragung auf der hochbitratigen ersten Datenverbindung zu speichern,
c) Bereitstellen einer Empfangsvorrichtung mit einem Datenvorhaltespeicher, die konfiguriert ist, die aus der Übertragung auf der hochbitratigen ersten Datenverbindung empfangenen Inhalte zu speichern,
d) Übertragen von Daten aus dem Datenbereithaltungsspeicher in den Datenvorhaltespeicher über die hochbitratige erste Datenverbindung, wenn die mobile Einheit innerhalb der Sendereichweite der Sendevorrichtung des Access Points ist, und
Bereitstellen einer zentralen Steuerungsvorrichtung, die konfiguriert ist, mit dem Access Point und der mobilen Einheit Steuerungsinformationen auf mindestens einer zweiten Datenverbindung auszutauschen,
wobei eine Sendereichweite der zweiten Datenverbindung größer ist als eine Sendereichweite der hochbitratigen ersten Datenverbindung,
wobei eine Übertragungsrate der zweiten Datenverbindung kleiner ist als eine Übertragungsrate der hochbitratigen ersten Datenverbindung,
wobei die mobile Einheit mit mindestens einem Zielgerät verbunden ist und konfiguriert ist, die Inhalte aus dem Datenvorhaltespeicher an das Zielgerät zu übermitteln,
wobei die Steuerungsinformationen, die von der mobilen Einheit an die zentrale Steuerungsvorrichtung gesendet werden und/oder die von der mobilen Einheit von der Steuerungsvorrichtung empfangen werden, Steuerungsinformationen über bestimmte Inhalte, die übertragen werden sollen, und/oder Informationen über eine Bewegung der mobilen Einheit aufweisen,
wobei die zentrale Steuerungsvorrichtung konfiguriert ist, basierend auf den Steuerungsinformationen mindestens einen Access Point zu bestimmen, in dessen Sendereichweite sich die mobile Einheit als nächstes befinden könnte und/oder den mindestens einen bestimmten Access Point veranlasst, die Inhalte für eine Übertragung bereitzuhalten.

7. Verfahren nach Anspruch 6, wobei das Verfahren weiter folgende Schritte aufweist:
e) Überprüfen, ob alle Inhalte aus dem Datenbereitstellungsspeicher in den Datenvorhaltespeicher übertragen wurden,
e1) wenn die Inhalte nicht vollständig übertragen wurden, Ermitteln mindestens eines nächsten Access Points, an dem die Übertragung mit den Schritten a) bis d) mit den verbleibenden Inhalten erneut durchgeführt werden kann, basierend auf Bewegungsinformationen, die in den Steuerungsinformationen enthalten sind,
e2) Beenden der Übertragung, wenn die Inhalte vollständig übertragen wurden.

8. Verfahren nach einem der Ansprüche 6 oder 7, wobei das Verfahren den folgenden Schritt aufweist:
f) Übertragen der Inhalte aus dem Datenvorhaltespeicher an das mindestens eine Zielgerät,
wobei die Übertragung mit einer Drahtlosübertragungstechnik, vorzugsweise WLAN oder VLC, erfolgt oder mit geeigneter Bus-Technik erfolgt.

9. Eine mobile Einheit zur Verwendung in einem System nach einem der Ansprüche 1 bis 5 und/oder zur Verwendung in einem Verfahren nach Anspruch 7 oder 8.

10. Ein Access Point insbesondere zur Verwendung in einem System nach einem der Ansprüche 1 bis 5 und/oder zur Verwendung in einem Verfahren nach Anspruch 7 oder 8.

## Claims

1. A system for transmitting contents with large data volumes comprising
at least one stationary access point, each comprising at least one transmitting device for large transmission rates with a specific transmission range,
at least one mobile unit comprising at least one receiving device for large transmission rates and being able to move into the transmission range of the access point, and
a central controller which is configured to exchange control information with the access point and the mobile unit on at least one second data connection,
wherein a transmission range of the second data connection is larger than a transmission range of the first data connection having a high bit rate,
wherein a transmission rate of the second data connection is smaller than a transmission rate of the first data connection having a high bit rate,
wherein the transmitting device of the access point and the receiving device of the mobile unit are configured to build up at least one wireless first data connection having a high bit rate for exchanging the contents when the mobile unit is within the transmission range of the transmitting device of the access point,
wherein the transmitting device comprises a data provision storage and is configured to store, from a data network, contents for a transmission on the first data connection having a high bit rate,
wherein the receiving device comprises a data buffer and is configured to store the contents received from the transmission on the first data connection having a high bit rate, and
wherein the transmitting device of the access point and the receiving device of the mobile unit are configured to transmit data from the data provision storage into the data buffer via the first data connection having a high bit rate when the mobile unit is within the transmission range of the transmitting device of the access point,
wherein the mobile unit is connected to at least one terminal and configured to transmit the contents from the data buffer to the terminal,
wherein the control information transmitted by the mobile unit to the central controller and/or received by the mobile unit from the controller comprises control information about specific contents that are to be transmitted and/or information about a movement of the mobile unit,
wherein the central controller is configured to determine, based on the control information, at least one access point in the transmission range of which the mobile unit might be located next and causes the at least one specific access point to keep the contents ready for a transmission.

2. The system according to claim 1,
wherein the controller is configured to determine at least one further access point which will perform a transmission and at which the specific contents are collected and kept ready in the data provision storage when, within a predetermined time, a transmission of data from the data provision storage into the data buffer via the first data connection having a high bit rate has not or only partly taken place.

3. The system according to any one of claim 1 or 2,
wherein at least one access point is provided at one of the railway traffic infrastructure elements from the following list: a station, a tunnel, a specific railway section, a signal means and an illumination means,
wherein the at least one mobile unit is realized at a rail vehicle which is configured to move along the railway traffic infrastructure elements.

4. The system according to any one of claims 1 to 3,
wherein at least one access point is provided at one of the infrastructure elements from the following list: a site with a public telephone, a tunnel, a stop, a transmitter pole, a signal means, an illumination means, and an outdoor advertising means;
wherein the mobile unit is provided at at least one of the following: a vehicle, an aircraft, a ship, a tablet, a notebook, an e-book reader, a game console, VR/AR glasses, and a smart pen; and/or
wherein the terminal is at least one of the following: a mobile smart device, a telephone, a tablet, a notebook, an e-book reader, a game console, VR/AR glasses, and a smart pen.

5. The system according to any one of claims 1 to 4,
wherein the first data connection having a high bit rate uses at least one of the following technologies: LTE, 5G, WLAN at 2.4 and/or 5 GHz, VLC, WiGig at 60 GHz, radio link technology, THz radio technology, and laser beam; and/or
wherein the second data connection uses at least one of the following technologies:
GSM (EDGE), UMTS (HSPA), LTE, 5G WLAN at 2.4 and/or 5 GHz, WiGig at 60 GHz, Bluetooth, ZigBee and Z-Wave.

6. A method using a system according to any one of claims 1 to 5, wherein the method comprises the following steps:
(a) providing a transmitting device at the access point and providing a receiving device at the mobile unit, which are configured to build up at least one wireless first data connection having a high bit rate for exchanging the contents when the mobile unit is within the transmission range of the transmitting device of the access point,
(b) providing a transmitting device with a data provision storage, which is configured to store, from a data network, contents for a transmission on the first data connection having a high bit rate,
(c) providing a receiving device with a data buffer, which is configured to store the contents received from the transmission on the first data connection having a high bit rate,
(d) transmitting data from the data provision storage into the data buffer via the first data connection having a high bit rate when the mobile unit is within the transmission range of the transmitting device of the access point, and
providing a central controller which is configured to exchange control information with the access point and the mobile unit on at least one second data connection,
wherein a transmission range of the second data connection is larger than a transmission range of the first data connection having a high bit rate,
wherein the transmission rate of the second data connection is smaller than a transmission rate of the first data connection having a high bit rate,
wherein the mobile unit is connected to at least one terminal and configured to transmit the contents from the data buffer to the terminal,
wherein the control information transmitted by the mobile unit to the central controller and/or received by the mobile unit from the controller comprise control information about specific contents that are to be transmitted and/or information about a movement of the mobile unit,
wherein the central controller is configured to determine, based on the control information, at least one access point in the transmission range of which the mobile unit might be located next and causes the at least one specific access point to keep the contents ready for a transmission.

7. The method according to claim 6, wherein the method further comprises the following steps:
(e) checking whether all contents from the data provision storage have been transmitted into the data buffer,
(e1) when the contents have not been transmitted completely, determining at least one next access point at which the transmission can be carried out again with the remaining contents with steps (a) to (d) based on the movement information contained in the control information,
(e2) terminating the transmission when the contents have been transmitted completely.

8. The method according to any one of claim 6 or 7, wherein the method comprises the following step:
(f) transmitting the contents from the data buffer to the at least one terminal,
wherein the transmission is performed with a wireless transmission technique, preferably WLAN or VLC, or with a suitable bus technique.

9. A mobile unit for use in a system according to any one of claims 1 to 5 and/or for use in a method according to claim 7 or 8.

10. An access point, in particular for use in a system according to any one of claims 1 to 5 and/or for use in a method according to claim 7 or 8.

## Revendications

1. Système pour la transmission de contenus ayant un grand volume de données avec au moins un point d'accès fixe, lequel comprend au moins un dispositif d'émission pour des vitesses de transmission élevées avec une portée d'émission définie,
au moins une unité mobile, comprenant au moins un dispositif de réception pour des vitesses de transmission élevées et pouvant se déplacer à l'intérieur de la portée d'émission du point d'accès, et
un dispositif de commande central, configuré pour échanger des informations de commande avec le point d'accès et l'unité mobile sur au moins une deuxième liaison de données,
où une portée d'émission de la deuxième liaison de données est supérieure à une portée d'émission de la première liaison de données à haut débit,
où une vitesse de transmission de la deuxième liaison de données est inférieure à une vitesse de transmission de la première liaison de données à haut débit,
où le dispositif d'émission du point d'accès et le dispositif de réception de l'unité mobile sont configurés pour établir au moins une première liaison de données à haut débit sans fil pour l'échange des contenus, si l'unité mobile se trouve à l'intérieur de la portée d'émission du dispositif d'émission du point d'accès,
où le dispositif d'émission comprend une mémoire de fourniture de données et est configuré pour mémoriser des contenus d'un réseau de données pour une transmission sur la première liaison de données à haut débit,
où le dispositif de réception comprend une mémoire de conservation de données et est configuré pour mémoriser les contenus reçus de la transmission sur la première liaison de données à haut débit, et
où le dispositif d'émission du point d'accès et le dispositif de réception de l'unité mobile sont configurés pour transmettre des données de la mémoire de fourniture de données vers la mémoire de conservation de données par la première liaison de données à haut débit, si l'unité mobile se trouve à l'intérieur de la portée d'émission du dispositif d'émission du point d'accès,
où l'unité mobile est reliée à au moins un appareil cible et est configurée pour transmettre les contenus de la mémoire de conservation de données à l'appareil cible, où les informations de commande adressées par l'unité mobile au dispositif de commande central et/ou reçues par l'unité mobile du dispositif de commande, comprennent des informations de commande sur des contenus définis ayant à être transmis et/ou des informations sur un déplacement de l'unité mobile,
où le dispositif de commande central est configuré pour déterminer au moins un point d'accès sur la base des informations de commande, à l'intérieur de la portée d'émission duquel l'unité mobile est susceptible de se trouver ensuite, et déclenche la préparation des contenus pour une transmission par ledit au moins un point d'accès déterminé.

2. Système selon la revendication 1,
où le dispositif de commande est configuré pour déterminer au moins un autre point d'accès qui effectuera une transmission et où les contenus définis seront recueillis et conservés dans la mémoire de fourniture de données, si une transmission de données de la mémoire de fourniture de données vers la mémoire de conservation de données par la première liaison de données à haut débit n'a pas eu lieu ou n'a eu lieu que partiellement pendant une durée définie.

3. Système selon la revendication 1 ou la revendication 2,
où au moins un point d'accès est présenté sur un des éléments d'infrastructure ferroviaire de la liste suivante : une gare, un tunnel, un tronçon de voie défini, un dispositif de signalisation et un dispositif d'éclairage,
où ladite au moins une unité mobile est réalisée sur un véhicule sur rails configuré pour se mouvoir le long des éléments d'infrastructure ferroviaire.

4. Système selon l'une des revendications 1 à 3,
où au moins un point d'accès est présenté sur un des éléments d'infrastructure ferroviaire de la liste suivante : un lieu avec un téléphone public, un tunnel, un arrêt de transport en commun, un pylône d'antenne, un dispositif de signalisation, un dispositif d'éclairage et un dispositif de publicité extérieur ;
où l'unité mobile est présentée sur au moins un des éléments suivants : un véhicule, un avion, un navire, une tablette, un ordinateur portable, une liseuse de livres électroniques, une console de jeux, un casque VR/AR et un stylo intelligent ; et/ou où l'appareil cible est au moins un des suivants : un dispositif intelligent mobile, un téléphone, une tablette, un ordinateur portable, une liseuse de livres électroniques, une console de jeux, un casque VR/AR et un stylo intelligent.

5. Système selon l'une des revendications 1 à 4,
où la première liaison de données à haut débit recourt à au moins une des technologies suivantes : LTE, 5G, WLAN à 2,4 et/ou 5 GHz, VLC, WiGig à 60 GHz, radiodiffusion terrestre par faisceaux hertziens, transmission THz et faisceau laser ; et/ou
où la deuxième liaison de données recourt à au moins une des technologies suivantes :
GSM (EDGE), UMTS (HSPA), LTE, 5G, WLAN à 2,4 et/ou 5 GHz, WiGig à 60 GHz, Bluetooth, ZigBee et Z-Wave.

6. Procédé recourant à un système selon l'une des revendications 1 à 5, ledit procédé comprenant les étapes suivantes :
a) préparation d'un dispositif d'émission sur le point d'accès et préparation d'un dispositif de réception sur l'unité mobile, configurés pour établir au moins une première liaison de données à haut débit sans fil pour échange de contenus, si l'unité mobile se trouve à l'intérieur de la portée d'émission du dispositif d'émission du point d'accès,
b) préparation d'un dispositif d'émission avec une mémoire de fourniture de données configurée pour mémoriser des contenus d'un réseau de données pour une transmission sur la première liaison de données à haut débit,
c) préparation d'un dispositif de réception avec une mémoire de conservation de données, configurée pour mémoriser les contenus reçus de la transmission sur la première liaison de données à haut débit,
d) transmission de données de la mémoire de fourniture de données vers la mémoire de conservation de données par la première liaison de données à haut débit, si l'unité mobile se trouve à l'intérieur de la portée d'émission du dispositif d'émission du point d'accès, et
préparation d'un dispositif de commande central configuré pour échanger des informations de commande avec le point d'accès et l'unité mobile sur au moins une deuxième liaison de données,
où une portée d'émission de la deuxième liaison de données est supérieure à une portée d'émission de la première liaison de données à haut débit,
où une vitesse de transmission de la deuxième liaison de données est inférieure à une vitesse de transmission de la première liaison de données à haut débit,
où l'unité mobile est reliée à au moins un appareil cible et est configurée pour transmettre les contenus de la mémoire de conservation de données à l'appareil cible,
où les informations de commande adressées par l'unité mobile au dispositif de commande central et/ou reçues par l'unité mobile du dispositif de commande, comprennent des informations de commande sur des contenus définis ayant à être transmis et/ou des informations sur un déplacement de l'unité mobile,
où le dispositif de commande central est configuré pour déterminer au moins un point d'accès sur la base des informations de commande, à l'intérieur de la portée d'émission duquel l'unité mobile est susceptible de se trouver ensuite, et déclenche la préparation des contenus pour une transmission par ledit au moins un point d'accès déterminé.

7. Procédé selon la revendication 6, ledit procédé comprenant en outre les étapes suivantes :
e) contrôle si tous les contenus de la mémoire de fourniture de données ont été transmis à la mémoire de conservation de données,
e1) si les contenus n'ont pas été intégralement transmis, détermination d'au moins un point d'accès suivant où la transmission peut à nouveau être effectuée avec les contenus restants suivant les étapes a) à d), sur la base d'informations de déplacement contenues dans les informations de commande,
e2) fin de la transmission une fois les contenus intégralement transmis.

8. Procédé selon la revendication 6 ou la revendication 7, ledit procédé comprenant l'étape suivante :
f) transmission des contenus de la mémoire de conservation de données vers ledit au moins un appareil cible,
où la transmission recourt à une technique de transmission sans fil, préférentiellement WLAN ou VLC, ou à une technique de bus appropriée.

9. Unité mobile utilisable dans un système selon l'une des revendications 1 à 5 et/ou utilisable dans un procédé selon la revendication 7 ou la revendication 8.

10. Point d'accès utilisable en particulier dans un système selon l'une des revendications 1 à 5 et/ou utilisable dans un procédé selon la revendication 7 ou la revendication 8.
